(19) Europäisches Patentamt / European Patent Office / Office européen des brevets

(11) **EP 2 357 213 B1**

(12) **EUROPEAN PATENT SPECIFICATION**

(45) Date of publication and mention
of the grant of the patent:
**03.07.2013 Bulletin 2013/27**

(51) Int Cl.:
***C09C 1/00*** *(2006.01)*

(21) Application number: **10151721.7**

(22) Date of filing: **26.01.2010**

(54) **Coating composition comprising submicron calcium carbonate-comprising particles, process to prepare same and use of submicron calcium carbonate-comprising particles in coating compositions**

Beschichtungszusammensetzung mit submikron-calcium-carbonathaltigen Teilchen, Herstellungsverfahren dafür und Verwendung der submikron-calcium-carbonathaltigen Teilchen in Beschichtungszusammensetzungen

Composition de revêtement comprenant des particules de taille submicronique à base de carbonate de calcium, son procédé de fabrication et l'utilisation des particules de taille submicronique à base de carbonate de calcium dans des compositions de revêtement

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(43) Date of publication of application:
**17.08.2011 Bulletin 2011/33**

(73) Proprietor: **Omya Development AG**
**4665 Oftringen (CH)**

(72) Inventors:
• **Gane, Patrick A.C.**
**4852 Rothrist (CH)**
• **Gysau, Detlef**
**5225 Oberbözberg (CH)**
• **Saunders, George**
**Brandon, VT 05733 (US)**
• **McJunkins, Joseph**
**Middleburg Heights**
**OH 44130 (US)**

(74) Representative: **Maiwald, Walter**
**Maiwald Patentanwalts GmbH**
**Elisenhof**
**Elisenstrasse 3**
**80335 München (DE)**

(56) References cited:
**WO-A1-2005/083016       WO-A2-2009/137504**
**US-A- 3 838 085**

**Description**

The present invention relates to a glossing and opacifying coating composition comprising submicron natural ground calcium carbonate-comprising particles (hereafter SNGCC). The invention further relates to a process to prepare a glossing and opacifying coating composition implementing SNGCC, and to the use of SNGCC in glossing and opacifying coating compositions.

Mineral pigments are widely used in coating systems, not only to decrease formulation costs but further to improve certain properties of the coating formulation, during its preparation or storage, or during or following its application to a substrate. In the realm of paint formulations, coating systems almost invariably implement titanium dioxide.

In the context of paint applications, titanium dioxide ($TiO_2$) is highly appreciated, particularly when of the rutile form, for providing significant opacity or hiding power. Titanium dioxide pigments marketed for use in paint formulation are well known to present a narrow particle size distribution along with a median particle diameter of between 0.2 and 0.6 $\mu$m, depending on the material and the mean particle size measurement method. Zinc sulphide and zinc oxide are similarly employed.

Titanium dioxide suffers however from being relatively high in cost, resulting in a continued desire to find lower-cost $TiO_2$ partial replacement pigments that do not translate in a reduction of optical and other coating composition properties.

GB1404564 describes ultrafine natural calcium carbonate filled paints and pigments, wherein said natural calcium carbonate has a particle diameter of from 0.5 to 4 $\mu$m and is employed to partially replace titanium dioxide. In this vein, Imerys has commercialised Polcarb, said to be suitable for glossing paint formulations, which has a mean particle size of 0.9 $\mu$m However, such natural calcium carbonate products do not allow the replacement of a part of $TiO_2$ in glossing paint formulation having a pigment volume concentration below the critical pigment volume concentration, without loss of gloss or opacity.

For the purpose of the present invention, the pigment volume concentration (PVC) is understood to refer to the fraction, quoted in %, of pigment volume relative to the total volume of the pigment plus the other components of the formulation, ie. it accounts for the pigment volume relative to the total formulation volume.

The critical pigment volume concentration (CPVC) is define as the pigment volume concentration as of which the resin component of the coating formulation is no longer sufficient to entirely coat all of the pigment particles in a coating. It is well known that above the CPVC, formulations generally provide a matt finish. By contrast glossy paint formulations implement a PVC that is below the CPVC.

US 5,171,631 discloses a coating composition for developing hiding on a suitable substrate, the coating composition having a pigment volume concentration (PVC) up to a critical pigment volume concentration (CPVC) and a pigment system comprising about 70-98% by volume of titanium dioxide and about 2-30% by volume of an aluminium trihydrate (ATH) spacer/extender pigment having a medium particle size of about 0.2 microns. Figure 1 of US 5,171,631 shows a d98/d50 ratio value of approximately 2.7, which corresponds to a relatively narrow particle size distribution. Although it is stated that, provided this ATH has a median particle size and particle size distribution generally similar to the median particle size and particle size distribution curve of $TiO_2$, a portion of $TiO_2$ may be replaced with an equal volume of ATH with no loss of hiding, Figure 2 of US 5,171,631 shows that the ATH-$TiO_2$-comprising paint formulations generally fail to achieve the same opacity values as the control paint formulation comprising $TiO_2$ alone.

Natural ground calcium carbonate, as opposed to its synthetic counterpart, precipitated calcium carbonate (PCC), generally suffers from a broad particle size distribution and irregular particle shapes. Indeed, as natural ground calcium carbonate is prepared by the grinding down of mined calcite, marble, chalk or limestone-containing stones, it is difficult to ensure that these stones are ultimately fractioned to form fine particles having a very uniform particle size.

By contrast, PCC is formed by a process of building crystals around nucleation sites. Control of nucleation and particle size development, particularly in the size domain under a few micrometers, during PCC precipitation has, over the years, become a well studied science and PCC particles having small and very uniform particle sizes and shapes are now widely available. As in US 5,171,631, the advantages of employing a uniform particle size product as a titanium dioxide spacer are alluded to in the publication made at http://wvvw.specialtyminerals.com/specialty-applications/specialty-markets-for-minerals/paint-and-coatings/precipitated-calciumcarbonate-pcc-in-paint/: "precipitated calcium carbonate (PCC) is most commonly used in paint as an extender for titanium dioxide, or $TiO_2$. The small and narrowly distributed PCC particles help space the individual $TiO_2$ particles and maximize their hiding power." In this domain, Specialty Minerals advertises Albafil PCC, a fine, 0.7 micron prismatic calcite, and a range of ultrafine or nano PCCs, namely Calofort S PCC, Calofort U PCC, Ultra-Pflex PCC and Multifex MMPCC, each having a median diameter of 0.07 micron.

In view of the above teachings of the prior art, it was remarkable that the Applicant found that a ground natural calcium carbonate that is finer than ground natural calcium carbonate products previously offered in this domain, may be used as a $TiO_2$ replacement or complementary pigment, even in the case when this ground natural calcium carbonate features a relatively broad particle size distribution and/or a median diameter that is different from that of $TiO_2$. By contrast

to the results of US 5,171,631 achieved with ATH, the ground natural calcium carbonate employed in the present invention not only more fully maintains the gloss and opacity of the paint formulation when used to replace part of the formulation $TiO_2$ at constant PVC, it may even lead to a gloss and/or opacity improvement.

A first object of the present invention is accordingly a coating composition having a PVC of from 5% up to the CPVC and characterised in that comprises at least one ground natural calcium carbonate having a median diameter (d50 (Mal)) of between 0.05 and 0.3 $\mu$m, (hereafter submicron ground natural calcium carbonate, SNGCC), and at least one pigment having a refractive index of greater than or equal to 2.5.

For the purpose of the present application, CPVC is determined according to the measurement method given in the examples section herebelow.

For the purpose of the present invention, the median diameter (d50 (Mal)) and d98 (Mal) are measured according to the measurement method provided in the examples section herebelow.

Another object of the present invention resides in a process to prepare a coating composition having a PVC of from 5% up to the CPVC, characterised in that:

a) at least one ground natural calcium carbonate (SNGCC) having a d50 (Mal) of between 0.05 and 0.3 $\mu$m is provided;
b) at least one pigment having a refractive index of greater than or equal to 2.5;
c) at least one resin is provided;
d) said SNGCC of step a) is mixed with said pigment of step b) and said resin of step c).

A third object of the present invention lies in the use of at least one ground natural calcium carbonate having a d50 (Mal) of between 0.05 and 0.3 $\mu$m, in a coating composition comprising at least one pigment having a refractive index of greater than or equal to 2.5, characterised in that for a coating composition having a constant PVC in the range of from 5% up to the CPVC, the gloss and/or opacity of the composition is equal to or greater than the gloss and/or opacity of the same composition implementing said pigment having a refractive index of greater than or equal to 2.5 in place of said ground natural calcium carbonate having a d50 of between 0.05 and 0.3 $\mu$m

For the purpose of the present invention, the gloss of a coating composition applied to a substrate is measured according to the measurement method provided in the examples section herebelow.

For the purpose of the present invention, the opacity of a coating composition applied to a substrate is measured according to the measurement method provided in the examples section herebelow.

Coating Composition of the Invention

A first object of the present invention is a coating composition having a PVC of from 5% up to the CPVC and characterised in that comprises at least one ground natural calcium carbonate having a median diameter (d50 (Mal)) of between 0.05 and 0.3 $\mu$m (hereafter submicron ground natural calcium carbonate, SNGCC), and at least one pigment having a refractive index of greater than or equal to 2.5.

Preferably, the coating composition has a PVC of from 15 to 25%.

Preferably, said SNGCC has a median diameter (d50 (Mal)) of between 0.1 and 0.3 $\mu$m.

In one embodiment, said SNGCC has a d98/d50 (Mal) of greater than 3. As indicated above and in contrast to the prior art, this ground natural calcium carbonate may, in an optional embodiment, have a particle size distribution that is broad and dissimilar to the particle size distribution said pigment having a refractive index of greater than or equal to 2.5 employed in the composition. Indeed, even a bi- or multimodal SNGCC particle size distribution may be envisioned.

In a preferred embodiment, said SNGCC has a d98 of less than or equal to 1 $\mu$m, more preferably of less than or equal to 0.8 $\mu$m, even more preferably of less than or equal to 0.6 $\mu$,m, and even more preferably of less than or equal to 0.4 $\mu$m.

Preferably, said SNGCC has a refraction index of approximately 1.5 to 1.7.

In another preferred embodiment, said pigment having a refractive index of greater than or equal to 2.5 is selected from one or more of the following: titanium dioxide and/or zinc sulphide and/or zinc oxide. In a more preferred embodiment, said pigment having a refractive index of greater than or equal to 2.5 is titanium dioxide. In such a case, it is preferred that the titanium dioxide : SNGCC weight ratio is of 70 : 30 to 98 : 2, and it is even more preferred that the titanium dioxide : SNGCC weight ratio is of 85 : 15 to 90 : 10.

In an alternative embodiment, the pigment contributing to the PVC of the composition is a mixture of at least one pigment having a refractive index of greater than or equal to 2.5, SNGCC and one or more of the following: clay, talc, magnesium carbonate, PCC, barium sulphate, mica and bentonite. In the case where magnesium carbonate is implemented in combination with SNGCC, this may be in the form of a dolomite.

This coating composition is characterised in that when all of said SNGCC is replaced by said pigment having a refractive index of greater than or equal to 2.5 while maintaining a constant PVC value in the range of from 15% up to the CPVC, the gloss of the SNGCC-comprising composition is within 10 % of the gloss of the composition wherein the SNGCC is fully replaced by said pigment having a refractive index of greater than or equal to 2.5. Preferably, the gloss of the SNGCC-comprising composition is within 5 %, and more preferably within 3%, of the gloss of the composition having only said pigment having a refractive index of greater than or equal to 2.5.

As shown in the examples section herebelow, it is not necessary that said SNGCC have a median diameter (d50 (Mal)) that is equivalent to the median diameter (d50 (Mal)) of said pigment having a refractive index of greater than or equal to 2.5, though this embodiment is not excluded from the present invention. The median diameter (d50 (Mal)) of SNGCC may differ from the median diameter (d50 (Mal)) of said pigment having a refractive index of greater than or equal to 2.5 by up to approximately 0.4 $\mu$m

Furthermore, as shown by the examples section herebelow, said SNGCC may feature a broad and even non-uniform particle size distribution relative to the distribution of said pigment having a refractive index of greater than or equal to 2.5 is, though again this does not exclude the case where the particle size distributions of SNGCC and said pigment having a refractive index of greater than or equal to 2.5 is are similar in breadth.

Alternatively, the gloss of the SNGCC-comprising composition may be increased by at least 1 % relative to the gloss of the composition wherein the SNGCC is fully replaced by said pigment having a refractive index of greater than or equal to 2.5. Relative to this embodiment, the gloss of the SNGCC-comprising composition is preferably increased by at least 5 % relative to the gloss of the composition wherein the SNGCC is fully replaced by said pigment having a refractive index of greater than or equal to 2.5.

In a preferred embodiment, said SNGCC is dispersed with one or more dispersants. Conventional dispersants known to the skilled person can be used. The dispersant can be anionic, cationic or non-ionic. A preferred dispersant is polyacrylic acid.

Said coating composition may be applied to a variety of substrates, including but not limited to, concrete, wood, paper, metal and board.

In a preferred embodiment, said coating composition is applied to a substrate in an amount so as to form a layer having a thickness of between 100 and 400 um.

Following application to a substrate, said coating composition preferably provides a gloss measured at 60° of greater than 70 %.

Following application to a substrate, said coating composition preferably provides an opacity (contrast ratio) of greater than 97%.

Said coating composition may further include one or more of the following: optical brightener, resin (such as a latex or acrylate-based binder, preferably in the form of an aqueous emulsion), defoamer, thickener, solvent, glycol ethers and dispersant. Preferably, the coating composition has a Brookfield viscosity of from 200 to 500 mPa.s, as measured according to the measurement method provided in the examples section herebelow.

Process to Prepare a Coating Composition of the Invention

The process of the present invention is a process to prepare a coating composition having a PVC of from 5% up to the CPVC, characterised in that:

a) at least one ground natural calcium carbonate (SNGCC) having a d50 of between 0.05 and 0.3 $\mu$m is provided;
b) at least one resin is provided;
c) said SNGCC of step a) is mixed with said resin of step b).

Said SNGCC of step a) may be provided in the form of an aqueous suspension, an aqueous dispersion or dry powder. In a preferred embodiment, said SNGCC of step a) is provided in the form of an aqueous suspension or dispersion.

Said resin is preferably a latex and/or acrylate-based binder, said acrylate-based binder preferably being in the form of an aqueous emulsion.

Use of SNGCC in coating compositions

A third object of the present invention lies in the use of at least one ground natural calcium carbonate having a d50 (Mal) of between 0.05 and 0.3 $\mu$m, in a coating composition, characterised in that for a coating composition having a constant PVC in the range of from 15% up to the CPVC, the gloss and/or opacity of the composition is equal to or greater than the gloss and/or opacity of the same composition implementing $TiO_2$ in place of said ground natural calcium carbonate having a d50 of between 0.05 and 0.3 $\mu$m.

Another object of the present invention is a paint comprising the coating composition of the invention.

**EXAMPLES**

**Suspension or dispersion solids content (% equivalent dry weight)**

The weight of the solid material in a suspension or dispersion is determined by weighing the solid material obtained by evaporating the aqueous phase of suspension and drying the obtained material to a constant weight.

**Particle size distribution (mass % particles with a diameter < X) and median grain diameter ($d_{50}$ (Sedi), $d_{50}$ (Mal) and $d_{98}$ (Mal)) of particulate material**

Weight median grain diameter ($d_{50}$ (Sedi)) and grain diameter mass distribution of a particulate material are determined via the sedimentation method, i.e. an analysis of sedimentation behaviour in a gravimetric field. The measurement is made with a Sedigraph™ 5100.

The method and the instrument are known to the skilled person and are commonly used to determine grain size of fillers and pigments. The measurement is carried out in an aqueous solution of 0.1 7% by weight of $Na_4P_2O_7$. The samples were dispersed using a high speed stirrer and ultrasonic.

Weight median grain diameter ($d_{50}$ (Mal)) was evaluated using a Malvern Mastersizer 2000 (Frauenhofer). The $d_{98}$ (Mal) value, measured using a Malvern Mastersizer 2000 (Frauenhofer), indicates a diameter value such that 98 % by weight of the particles have a diameter of less than this value.

**BET specific surface area ($m^2/g$)**

BET specific surface area values were determined using nitrogen and the BET method according to ISO 9277.

**Gloss of a coated surface**

Gloss values are measured at the listed angles according to DIN 67 530 on painted surfaces prepared with a coater gap of 150 and 300 $\mu$m on contrast cards.

**Contrast Ratio (opacity) of a coated surface**

Contrast ratio values are determined according to ISO 6504/3 at a spreading rate of 7.5 $m^2/l$.

**Suspension or dispersion Brookfield-viscosity (mPas)**

Brookfield-viscosities are measured with a Brookfield DV-IIViscometer equipped with a LV-3 spindle at a speed of 100 rpm and room temperature (20 $\pm$ 3 °C).

**Pigment Volume Concentration (PVC, %)**

The pigment volume concentration is calculated as described in Section 6.2.3 of the book entitled "Fuellstoff' by Detlef Gysau (Hannover: Vincentz Network 2005).

$$\frac{\text{Total sum by volume of all pigments + extenders in paint}}{\text{Total sum by volume of all solid ingredients in paint}} \times 100\%$$

**Critical Pigment Volume Concentration (CPVC, %)**

The critical pigment volume concentration is a well known concentration widely used in the paint industry. It is generally considered to represent the point at which there is just enough resin to wet the pigment particles, and changes to the PVC near to the CPVC can result in abrupt changes to coating properties, such as porosity and gloss. The CPVC and its measurement method according to ISO 4618 are discussed in Section 6.2.4 of the book entitled "FuellstofF' by Detlef Gysau (Hannover: Vincentz Network 2005).

Materials:

SNGCC

SNGCC dispersions used in the following examples are natural ground calcium carbonate (marble from Vermont) having the median particle size $d_{50}$ and particle size characteristics given in the table below.

| SNGCC | Solids (%) | SSA (m2/g) | % < 1 $\mu$m | % < 0.5 $\mu$m | % < 0.2 $\mu$m | $d_{98}$ (Mal) $\mu$m | $d_{50}$ (Mal) $\mu$m | $d_{98}/d_{50}$ (Mal) |
|---|---|---|---|---|---|---|---|---|
| 1 | 60 | 36.0 | 98.3 | 94.3 | 65.1 | 0.53 | 0.62 | 5 |
| 2 | 49 | 37.7 | 98.3 | 94.8 | 65.7 | 0.55 | 0.122 | 4.5 |
| 3 | 46 | 38.6 | 97.7 | 94.8 | 69.5 | 0.31 | 0.128 | 2.4 |

Titanium dioxide

The titanium dioxide employed in the examples herebelow consists of 95% by weight of pure rutile $TiO_2$, with the remaining weight being accounted for in a surface treatment of alumina, zirconia and an organic surface treatment agent. This pigment features a d50 (Mal) of approximately 0.55 $\mu$m and is provided in the form of an aqueous paste having a 75% solids content. By scanning electron microscope imaging, the particles appear to be in the range of 0.2 to 0.25 $\mu$m The refractive index of $TiO_2$ is 2.7.

**Example 1:**

The following example illustrates a comparative paint composition and paint compositions according to the invention. The formulated paints were applied to a contrast card in the necessary amounts in order to measure both gloss and opacity.

| Example | 1 | 2 | 3 | 4 |
|---|---|---|---|---|
| Comparison (CO)/Invention (IN) | CO | IN | IN | IN |
| Paint composition | | | | |
| Water (g) | 133.6 | 119.8 | 110.9 | 108.0 |
| Hydrophilic copolymer dispersant, 50% solids content (g) | 6.4 | 6.5 | 6.5 | 6.5 |
| Ammonia, 24% active content (g) | 4 | 4 | 4 | 4 |
| Paraffin-based mineral oil mixture containing silicone (g) | 7 | 7 | 7 | 7 |
| Rheotech 200 thickener from Coatex (g) | 15 | 15 | 15 | 15 |
| Propylene glycol (g) | 10 | 10 | 10 | 10 |
| Butyl diglycol (g) | 5 | 5 | 5 | 5 |
| Dipropylene Glycol n-Butyl Ether (g) | 10 | 10 | 10 | 10 |
| Ester alcohol | 9 | 9.11 | 9.11 | 9.11 |
| with Mw = 216 g/mol (g) | | | | |
| Acrylate binder emulsion, 48% active content (g) | 550 | 557 | 557 | 557 |
| $TiO_2$ (g) | 250 | 218 8 | 218 8 | 218 |
| SNGCC1 (g) | | 39 | | |
| SNGCC2 (g) | | | 48 | |
| SNGCC3 (g) | | | | 51 1 |
| % weight $TiO_2$ replaced by SNGCC | 0 | 12 | 12 | 12 |

(continued)

| Paint composition | | | | |
|---|---|---|---|---|
| PVC (%), approx. | 21.1 | 21.1 | 21.1 | 21.1 |
| Properties on application of the paint formulation | | | | |
| Contrast ratio at 7.5 m2/1 spreading rate | | | | |
| (%) | 98.6 | 98.5 | 98.6 | 98.5 5 |
| Gloss obtained using a coater gap of 150 μm | | | | |
| 20° | 51.8 | 50.6 | 50.6 | 55.7 |
| 60° | 80.3 3 | 79.7 | 79.7 | 81.7 |
| 85° | 93.6 | 95.9 | 96.2 | 96.8 |
| Gloss obtained using a coater gap of 150 μm | | | | |
| 20° | 55.6 | 52.4 | 54.7 | 56.8 8 |
| 60° | 79.4 | 78.7 | 80.1 1 | 80.5 5 |
| 85° | 95.6 | 95.7 | 96.5 5 | 95.8 8 |

The results of the above table show that replacing a part of $TiO_2$ with the SNGCC according to the invention, and having d98/d50 values ranging of from 2.4 to 5, results in coatings having essentially the same opacity (contrast ratio) as the comparison formulation having equal PVC but only $TiO_2$. Gloss values are observed to be equivalent or improved relative to the comparison formulation having equal PVC but only $TiO_2$.

## Claims

1. Coating composition having a PVC (pigment volume concentration) of from 5% up to the CPVC (critical pigment volume concentration) and
**characterised in that** it comprises at least one ground natural calcium carbonate having a median diameter (d50 (Mal)) of between 0.05 and 0.3 μm (submicron natural ground calcium carbonate; SNGCC), and at least one pigment having a refractive index of greater than or equal to 2.5.

2. Coating composition according to claim 1,
**characterised in that** said coating composition has a PVC of from 15 to 25%.

3. Coating composition according to claim 1 or 2,
**characterised in that** said SNGCC has a median diameter (d50 (Mal)) of between 0.1 and 0.3 μm.

4. Coating composition according to any of claims 1 to 3,
**characterised in that** said SNGCC has a d98/d50 (Mal) of greater than 3.

5. Coating composition according to any of claims 1 to 4,
**characterised in that** said SNGCC has a d98 of less than or equal to 1 μm, preferably of less than or equal to 0.8 μm, more preferably of less than or equal to 0.6 μm, and even more preferably of less than or equal to 0.4 μm.

6. Coating composition according to any of claims 1 to 5,
**characterised in that** said pigment having a refractive index of greater than or equal to 2.5 is selected from one or more of the following: titanium dioxide and/or zinc sulphide and/or zinc oxide, and is more preferably titanium dioxide.

7. Coating composition according to claim 6,
**characterised in that** said pigment having a refractive index of greater than or equal to 2.5 is titanium dioxide and the titanium dioxide : SNGCC weight ratio is of 70 : 30 to 98 : 2, and it is more preferably of 85 : 15 to 90 : 10.

8. Coating composition according to any of claims 1 to 7,

**characterised in that** the gloss of the SNGCC-comprising composition is increased by at least 1 %, preferably by at least 5%, relative to the gloss of the composition wherein the SNGCC is fully replaced by pigment having a refractive index of greater than or equal to 2.5.

9. Concrete, wood, paper, metal or board,
   **characterised in that** they are coated with the coating composition according to any of claims 1 to 8.

10. Process to prepare a coating composition having a PVC of from 5% up to the CPVC,
    **characterised in that**:

    a) at least one ground natural calcium carbonate (SNGCC) having a d50 (Mal) of between 0.05 and 0.3 $\mu$m is provided;
    b) at least one pigment having a refractive index of greater than or equal to 2.5;
    c) at least one resin is provided;
    d) said SNGCC of step a) is mixed with said pigment of step b) and said resin of step c).

11. Process according to claim 10,
    **characterised in that** said SNGCC of step a) is provided in the form of an aqueous suspension or dispersion.

12. Process according to claim 10 or 11,
    **characterised in that** said resin is a latex and/or acrylate-based binder, said acrylate-based binder preferably being in the form of an aqueous emulsion.

13. Use of at least one ground natural calcium carbonate having a d50 (Mal) of between 0.05 and 0.3 $\mu$m, in a coating composition comprising at least one pigment having a refractive index of greater than or equal to 2.5,
    **characterised in that** for a coating composition having a constant PVC in the range of from 5% up to the CPVC, the gloss and/or opacity of the composition is equal to or greater than the gloss and/or opacity of the same composition implementing said pigment having a refractive index of greater than or equal to 2.5 in place of said ground natural calcium carbonate having a d50 of between 0.05 and 0.3 $\mu$m.

14. Paint,
    **characterised in that** it comprises the coating composition of any of claims 1 to 8.

**Patentansprüche**

1. Beschichtungszusammensetzung mit einer PVC (Pigmentvolumenkonzentration) von 5 % bis zu der CPVC (kritischen Pigmentvolumenkonzentration) und **dadurch gekennzeichnet, dass** sie wenigstens ein vermahlenes, natürliches Calciumcarbonat mit einem mittleren Durchmesser (d50(Mal)) von zwischen 0,05 und 0,3 $\mu$m (natürliches, vermahlenes Submikroncalciumcarbonat; SNGCC) und wenigstens ein Pigment mit einem Brechungsindex von grösser oder gleich 2,5 umfasst.

2. Beschichtungszusammensetzung nach Anspruch 1, **dadurch gekennzeichnet, dass** die Beschichtungszusammensetzung eine PVC von 15 bis 25 % aufweist.

3. Beschichtungszusammensetzung nach Anspruch 1 oder 2, **dadurch gekennzeichnet, dass** das SNGCC einen mittleren Durchmesser (d50(Mal)) von zwischen 0,1 und 0,3 $\mu$m aufweist.

4. Beschichtungszusammensetzung nach einem der Ansprüche 1 bis 3, **dadurch gekennzeichnet, dass** das SNGCC einen d98/d50 (Mal) von grösser 3 aufweist.

5. Beschichtungszusammensetzung nach einem der Ansprüche 1 bis 4, **dadurch gekennzeichnet, dass** das SNGCC einen d98 von kleiner oder gleich 1 $\mu$m aufweist, bevorzugt von kleiner oder gleich 0,8 $\mu$m, bevorzugter von kleiner oder gleich 0,6 $\mu$m, und noch bevorzugter von kleiner oder gleich 0,4 $\mu$m.

6. Beschichtungszusammensetzung nach einem der Ansprüche 1 bis 5, **dadurch gekennzeichnet, dass** das Pigment mit einem Brechungsindex von grösser oder gleich 2,5 ausgewählt ist aus einem oder mehreren der folgenden: Titandioxid und/oder Zinksulfid und/oder Zinkoxid, und ist bevorzugter Titandioxid.

**7.** Beschichtungszusammensetzung nach Anspruch 6, **dadurch gekennzeichnet, dass** das Pigment mit einem Brechungsindex von grösser oder gleich 2,5 Titandioxid ist und das Titandioxid : SNGCC-Gewichtsverhältnis von 70 : 30 bis 98 : 2 beträgt, und es bevorzugter von 85 : 15 bis 90 : 10 beträgt.

**8.** Beschichtungszusammensetzung nach einem der Ansprüche 1 bis 7, **dadurch gekennzeichnet, dass** der Glanz der SNGCC umfassenden Zusammensetzung um wenigstens 1 % erhöht ist, bevorzugt um wenigstens 5 %, bezogen auf den Glanz der Zusammensetzung, bei der das SNGCC vollständig durch ein Pigment mit einem Brechungsindex von grösser oder gleich 2,5 ersetzt ist.

**9.** Beton, Holz, Papier, Metall oder Brett, **dadurch gekennzeichnet**, das sie mit der Beschichtungszusammensetzung gemäss einem der Ansprüche 1 bis 8 beschichtet sind.

**10.** Verfahren zur Herstellung einer Beschichtungszusammensetzung mit einer PVC von 5 % bis zu der CPVC, **dadurch gekennzeichnet, dass**:

a) wenigstens ein vermahlenes, natürliches Calciumcarbonat (SNGCC) mit einem d50 (Mal) von zwischen 0,05 und 0,3 $\mu$m bereitgestellt wird;
b) wenigstens ein Pigment mit einem Brechungsindex von grösser oder gleich 2,5;
c) wenigstens ein Harz bereitgestellt wird;
d) das SNGCC aus Schritt a) mit dem Pigment aus Schritt b) und dem Harz aus Schritt c) vermischt wird.

**11.** Verfahren nach Anspruch 10, **dadurch gekennzeichnet, dass** das SNGCC aus Schritt a) in der Form einer wässrigen Suspension oder Dispersion bereitgestellt wird.

**12.** Verfahren nach Anspruch 10 oder 11, **dadurch gekennzeichnet, dass** das Harz ein Latex und/oder Acrylat basiertes Bindemittel ist, wobei das Acrylat basierte Bindemittel bevorzugt in der Form einer wässrigen Emulsion ist.

**13.** Verwendung wenigstens eines vermahlenen, natürlichen Calciumcarbonats mit einem d50 (Mal) von zwischen 0,05 und 0,3 $\mu$m in einer Beschichtungszusammensetzung umfassend wenigstens ein Pigment mit einem Brechungsindex von grösser oder gleich 2,5, **dadurch gekennzeichnet, dass** für eine Beschichtungszusammensetzung mit einer konstanten PVC im Bereich von 5 % bis zu der CPVC der Glanz und/oder die Opazität der Zusammensetzung gleich oder grösser ist als der der Glanz und/oder die Opazität der Zusammensetzung, die das Pigment mit einem Brechungsindex von grösser oder gleich 2,5 anstelle des vermahlenen, natürlichen Calciumcarbonats mit einem d50 von zwischen 0,05 und 0,3 $\mu$m verwendet.

**14.** Farbe, **dadurch gekennzeichnet, dass** sie die Beschichtungszusammensetzung gemäss einem der Ansprüche 1 bis 8 umfasst.

**Revendications**

**1.** Composition de revêtement ayant une PVC (concentration volumique en pigment) de 5 % jusqu'à la CPVC (concentration volumique critique en pigment) et **caractérisée en ce qu'**elle comprend au moins un carbonate de calcium naturel broyé ayant un diamètre médian (d50(Mal)) de entre 0,05 et 0,3 $\mu$m (carbonate de calcium naturel broyé inférieur au micron ; SNGCC) et au moins un pigment ayant un indice de réfraction supérieur ou égal à 2,5.

**2.** Composition de revêtement selon la revendication 1, **caractérisée en ce que** la dite composition de revêtement a une PVC de 15 à 25 %.

**3.** Composition de revêtement selon la revendication 1 ou 2, **caractérisée en ce que** le dit SNGCC a un diamètre médian (d50(Mal)) de entre 0,1 et 0,3 $\mu$m.

**4.** Composition de revêtement selon l'une des revendications 1 à 3, **caractérisée en ce que** le dit SNGCC a un d98/d50 (Mal) supérieur à 3.

**5.** Composition de revêtement selon l'une des revendications 1 à 4, **caractérisée en ce que** le dit SNGCC a un d98 inférieur ou égal à 1 $\mu$m, préférablement inférieur ou égal à 0,8 $\mu$m, plus préférablement inférieur ou égal à 0,6 $\mu$m, et même plus préférablement inférieur ou égal à 0,4 $\mu$m.

**6.** Composition de revêtement selon l'une des revendications 1 à 5, **caractérisée en ce que** le dit pigment ayant un indice de réfraction supérieur ou égal à 2,5 est choisi parmi un ou plusieurs des suivants : dioxyde de titane et/ou sulfure de zinc et/ou oxyde de zinc, et est préférablement du dioxyde de titane.

**7.** Composition de revêtement selon la revendication 6, **caractérisée en ce que** le dit pigment ayant un indice de réfraction supérieur ou égal à 2,5 est le dioxyde titane et le rapport en poids dioxyde de titane: SNGCC est de 70 : 30 à 98 : 2, et est plus préférablement de 85 : 15 à 90 : 10.

**8.** Composition de revêtement selon l'une des revendications 1 à 7, **caractérisée en ce que** la brillance de la composition comprenant le SNGCC est augmentée d'au moins 1 %, préférablement d'au moins 5 %, par rapport à la brillance de la composition où le SNGCC est totalement remplacé par du pigment ayant un indice de réfraction supérieur ou égal à 2,5.

**9.** Béton, bois, papier, métal ou carton, **caractérisés en ce qu'**ils sont revêtus avec la composition de revêtement selon l'une des revendications 1 à 8.

**10.** Procédé de préparation d'une composition de revêtement ayant une PVC de 5 % jusqu'à la CPVC, **caractérisé en ce que**:

a) on fournit au moins un carbonate de calcium naturel broyé (SNGCC) ayant un d50 (Mal) entre 0,05 et 0,3 $\mu$m;
b) au moins un pigment ayant un indice de réfraction supérieur ou égal à 2,5;
c) on fournit au moins une résine;
d) on mélange le dit SNGCC de l'étape a) avec le dit pigment de l'étape b) et la dite résine de l'étape c).

**11.** Procédé selon la revendication 10, **caractérisé en ce que** le dit SNGCC de l'étape a) est fourni sous la forme d'une suspension aqueuse ou d'une dispersion.

**12.** Procédé selon la revendication 10 ou 11, **caractérisé en ce que** la dite résine est un latex et/ou un liant à base d'acrylate, le dit liant à base d'acrylate étant préférablement sous la forme d'une émulsion aqueuse.

**13.** Utilisation d'au moins un carbonate de calcium naturel broyé (SNGCC) ayant un d50 (Mal) entre 0,05 et 0,3 $\mu$m dans une composition de revêtement comprenant au moins un pigment ayant un indice de réfraction supérieur ou égal à 2,5, **caractérisée en ce que** pour une composition de revêtement ayant une PVC constante allant de 5 % jusqu'à la CPVC, la brillance et/ou l'opacité de la composition est égale ou supérieure à la brillance et/ou l'opacité de la même composition mettant en oeuvre le dit pigment ayant un indice de réfraction supérieur ou égal à 2,5 à la place du dit carbonate de calcium naturel broyé ayant un d50 entre 0,05 et 0,3 $\mu$m.

**14.** Peinture caractérisée ne ce qu'elle comprend la composition de revêtement selon l'une des revendications 1 à 8.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1404564 A
- US 5171631 A